# EUROPEAN PATENT SPECIFICATION

(11) **EP 2 048 559 B1**
(45) Date of publication and mention of the grant of the patent: **27.05.2009**
(21) Application number: 07118108.5
(22) Date of filing: 09.10.2007
(51) Int. Cl.: G05B 19/418, G05B 23/02

(54) **A method and a system for improving the operability of a production plant**
Verfahren und System zur Verbesserung der Nutzung einer Produktionsanlage
Procédé et système pour améliorer l'exploitation d'une installation de production

(43) Date of publication of application: 15.04.2009
(73) Proprietor: ABB Oy, 00380 Helsinki (FI)
(72) Inventor: Luotojärvi, Mika, 02730 Espoo (FI)

(56) References cited:
- WO-A-01/55805
- GB-A- 2 426 090
- JP-A- 2000 122 712
- US-A1- 2002 143 421

## Description

### Scope of the invention

The present invention relates to a method and a system for improving the operability of a production plant according to the preambles of Claims 1, 6 and 7.

### Prior art

The trend of integrating the maintenance and repair, automation, and production functions to form an operations function in industrial plants has created a growing need for decision-making and operation assisting tools.

Overall Equipment Effectiveness (OEE) is generally used key performance indicator (KPI) in industrial production processes to tell what is the effectiveness of the equipment and what it has been in the history. OEE is calculated by multiplying three independently measured values: Availability, Performance, and Quality. OEE is a measure comparing how well manufacturing equipment is running compared to the set targets.

When Overall Equipment Effectiveness is used as a tool for controlling the operations of a plant there is no predictability component. OEE tells the history of the effectiveness and does not provide information of the future.

The predictability is based on breaking down the effectiveness of the plant to its components, possibility to drill down to the Overall Equipment Effectiveness of each sub-process and on the understanding of the relations between the processes and their sub-processes. The amount of data in a plant's existing systems' databases, i.e. automation systems, information systems, Manufacturing Execution Systems (MES), Computerized Maintenance Management Systems (CMMS), and other systems at industrial plants, is huge but unclear. The information usability of the current systems is poor, i.e. the users can not utilize it.

US 2003/0014699 A1 describes a method and system for determining the effectiveness of production installations, significant fault events that bring about deviations from a desired effectiveness and the causes of fault events.

US 2002/0143421 A1 describes a method according to the preamble of claim 1 and a system according to the preamble of claim 6.

### Description of invention

The purpose of the present invention is to create a method and a system for improving the operability of a production plant. In order to achieve this, the invention is characterised by the features specified in the characteristics sections of claims 1, 7 and 8. Some other preferred embodiments of the invention have the characteristics specified in the dependent claims.

In a method for improving the operability of a production plant the production plant has at least one production process comprising at least one equipment, a system for obtaining equipment condition measuring data and a system for obtaining maintenance work data. The equipment condition measuring data and the maintenance work data is continuously acquired and stored in an equipment reliability calculation system. Equipment reliability is calculated based on the equipment condition measuring data and the maintenance work data and Proactive Overall Equipment Effectiveness is calculated as a product of the equipment reliability and Overall Equipment Effectiveness (OEE).

In a system for improving the operability of a production plant, the production plant has at least one production process comprising at least one equipment, a system for obtaining equipment condition measuring data and a system for obtaining maintenance work data. The system has means for continuously acquiring the equipment condition measuring data and the maintenance work data, and means for storing the acquired equipment condition measuring data and the maintenance work data in an equipment reliability calculation system, and means for calculating equipment reliability based on the equipment condition measuring and the maintenance work data and Proactive Overall Equipment Effectiveness is calculated as a product of the equipment reliability and Overall Equipment Effectiveness (OEE).

A software product data recording medium in which program code is stored, which program code will cause a computer to perform a method for improving the operability of a production plant. The production plant has at least one production process comprising at least one equipment, a system for obtaining equipment condition measuring data and a system for obtaining maintenance work data. The equipment condition measuring data and the maintenance work data are continuously acquired and stored in an equipment reliability calculation system, and equipment reliability is calculated based on the equipment condition measuring data and the maintenance work data and Proactive Overall Equipment Effectiveness is calculated as a product of the equipment reliability and Overall Equipment Effectiveness (OEE).

Proactive Overall Equipment Effectiveness provides information on the possibility of expected decrease of Overall Equipment Effectiveness in near future. By combining the equipment reliability to the Overall Equipment Effectiveness in real-time, it can be seen whether Overall Equipment Effectiveness is expected to stay at the current level or what is the risk for it to drop in near future.

The proactive information on the behavior of Overall Equipment Effectiveness is obtained by combining of the equipment reliability, i.e. the risk for the equipment failure or performance decrease, to Overall Equipment Effectiveness. The equipment reliability information is collected from the existing mill automation systems, information systems, user entered diary or other notes, manufacturing execution systems (MES), computerized maintenance management systems (CMMS) or other systems. The equipment reliability information can be produced also in the system calculating the Proactive Overall Equipment Effectiveness. The equipment reliability is calculated based on the equipment real-time measured data, user entered diary or other notes, laboratory measurements, maintenance, and/or other equipment information from control systems (DCS), condition monitoring systems, manufacturing execution systems (MES), and/or computerized maintenance management systems (CMMS). The equipment reliability can be produced in Computerized Maintenance Management Systems (CMMS) or other systems based on some known reliability technologies. Further, it can be calculated by comparing the current state of the preventive maintenance works to scheduled plan of maintenance works or by comparing equipment condition measurements or other measurements to their targets and set exception limits.

In the calculation of the equipment reliability a real-time integration of data in various information systems existing in the production plant is performed. For instance, the data is transferred to the maintenance managements systems from the process information and the automation systems and from the production planning and the quality managements systems. The required data may also be shared with maintenance managements systems, depending on the technical solution. This integration improves the usability of the information in production plant's existing systems. The existing information collected from different information systems is converted to support the operability of the production plant.

Proactive Overall Equipment Effectiveness can be calculated in real-time by acquiring and combining the source information from the Distributed control systems (DCS), condition monitoring, Manufacturing Execution System (MES), Computerized Maintenance Management System (CMMS) and/or other existing information systems in the industrial plant.

In an embodiment of the method and a system for improving the operability of a production plant a logical model of a mill or production line is defined. It is made by dividing a mill or production line into processes and further to sub-processes and defining their connections and impacts to each others. A subprocess can contain one or more equipments or other sub-processes. The Proactive Overall Equipment Effectiveness is calculated for equipment, a subprocess, process or for a plant. If a subprocess contains several equipments, the values of the Proactive Overall Equipment Effectiveness are normalized, prioritized, and cumulated to the subprocess and further to connected sub-processes. The cumulation ends up to the Proactive Overall Equipment Effectiveness of the whole plant or production line. Each calculation of the Proactive Overall Equipment Effectiveness contains definitions for filtering the exception information in cumulation.

The system interface allows the configuration of the logical models by the users, e.g. personnel of the operations function. This makes the continuous improving of the logical models and storing the knowledge of the personnel possible.

In another embodiment of the invention the Proactive Overall Equipment Effectiveness is presented in easy to understand way to the users, i.e. plant operators and maintenance and automation personnel, i.e. operations personnel. A real-time display reveals the deviations in the Proactive Overall Equipment Effectiveness immediately. The users of the a method and a system for improving the operability of a production plant can drill down to the logical process model via the user interface and see the source components of Proactive Overall Equipment Effectiveness to find out the most significant reason for decreased value of it. Based on this information the users can make decisions for instance on what is the most important maintenance work to do, i.e. maintenance work priorization.

Proactive Overall Equipment Effectiveness is a percentage number as well as Overall Equipment Effectiveness, but in addition it contains exception information that tells whether one or more of the reliability components have violated the set exception limits, e.g. the operating hours of the equipment since last maintenance have exceed the set limit. The exception information may contain several priority levels.

The method and the system for improving the operability of a production plant help industrial plants to improve their effectiveness. The method and the system aid operations and maintenance organizations in industrial plants in their decision making.

When the method and the system for improving the operability of a production plant is used and a Proactive Overall Equipment Effectiveness is defined its value is continuously monitored. The improvement of the Proactive Overall Equipment Effectiveness can have a major impact on profitability of the production plant by increasing productivity and reducing maintenance costs, not to mention avoiding unnecessary shutdowns, major stoppages and defects.

The method and the system for improving the operability of a production plant are applicable to various industrial processes and plants, e.g. metal manufacturing, mineral manufacturing, cement manufacturing, oil and gas manufacturing, chemical manufacturing, paper and pulp manufacturing.

In an advantageous embodiment the invented method and system are performed using a computer. The programs to be used are stored in the memory of the computer or on computer readable media, which can be loaded on a computing device, for example a DVD. These computer readable media have instructions for enabling the computer to execute a method.

### Figures

In the following the invention will be described in more detail with the help of certain embodiments by referring to the enclosed drawings, where
- Figure 1 is a general illustration of a method for calculating the Overall Equipment Effectiveness (OEE);
- Figure 2 is a general illustration of a method for calculating the Proactive Overall Equipment Effectiveness (POEE);
- Figure 3 is a general illustration of a logical model of a mill for calculating and cumulating the Proactive Overall Equipment Effectiveness for an industrial plant;
- Figure 4 is a general illustration of a simplified logical model of a pulp and paper mill for calculating and cumulating the Proactive Overall Equipment Effectiveness;
- Figure 5 illustrates an example of calculation of the Proactive Overall Equipment Effectiveness for a sub-process in a plant.

### Detailed description

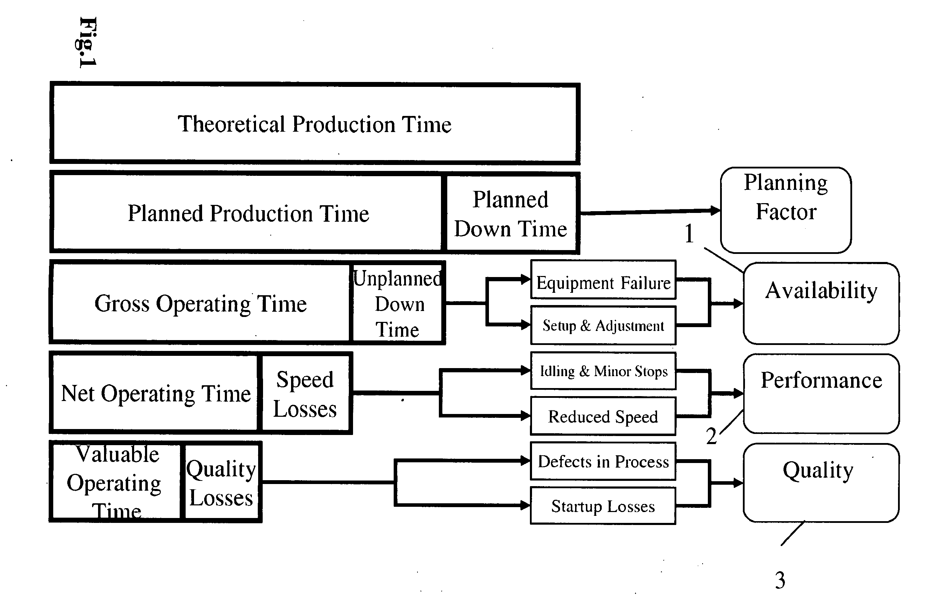

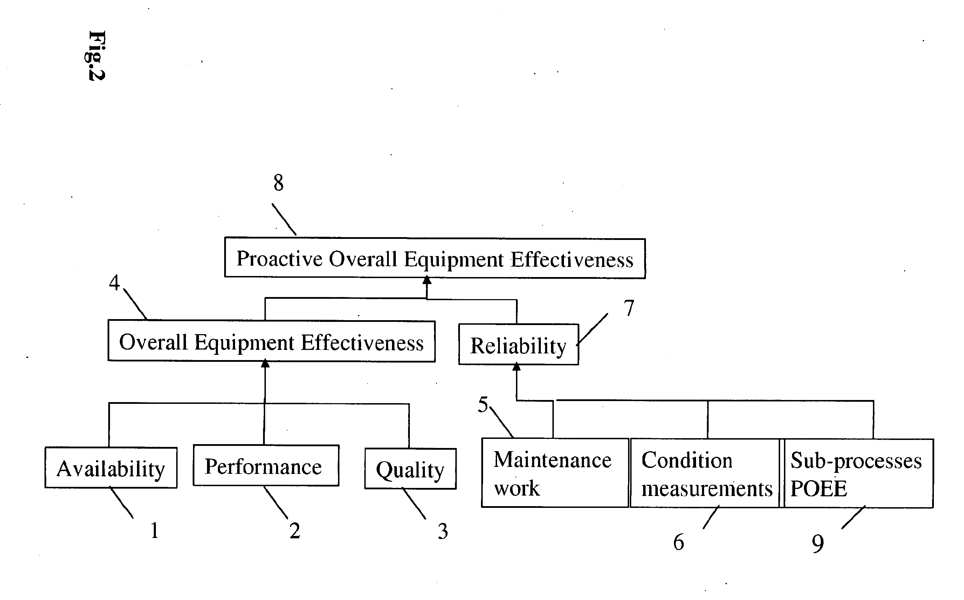

Figure 1 illustrates a prior art method for calculating the Overall Equipment Effectiveness (OEE). Overall Equipment Effectiveness 4 (see Fig.2) is obtained as a product of availability 1, performance 2 and quality 3, OEE = Availability (1) x Performance (2) x Quality (3).

Theoretical production time is the amount of time the plant is open and available for equipment operation. Planned production time is theoretical production time less planned down time. The planning factor indicates the percentage of the total theoretical production time planned for - or realized, without expressing anything about the way the installation has been used in terms of effectiveness.

Availability 1 is the ratio of gross operating time to planned production time, where gross operating time is planned production time less unplanned down time.

Performance 2 is the ratio of net operating time to gross operating time, where net operating time is operating time less speed loss or the relation of the actual production speed compared to the nominal, budgeted, or target production speed. Speed loss implies that the machine is operating but not at its maximum speed.

Quality 3 is the ratio of valuable operating time to net operating time, where valuable operating time is net operating time less quality losses. Loss of quality occurs when the machine makes products that are not within the set acceptance limits.

Figure 2 illustrates a method for calculating a Proactive Overall Equipment Effectiveness.

Overall Equipment Effectiveness 4 is obtained as a product of availability 1, performance 2 and quality 3, OEE = Availability (1) x Performance (2) x Quality (3), as illustrated in Fig. 1.

Equipment reliability 7 is the probability of trouble-free operation. If there is an actual risk for equipment failure or performance decrease the equipment reliability is low. It is based on measurements, observations on the equipment and plans and calculated as a product of maintenance work 5 and equipment condition measurements 6. Maintenance work 5 can be calculated by comparing the current state of the preventive maintenance works to scheduled plan of maintenance works, or the actual operating hours since last maintenance to the planned amount of operating hours between maintenance, for instance. Equipment condition measurements 6 can be calculated by comparing equipment condition measurements, such as temperatures, pressures, vibrations, or other measurements to their targets and set exception limits, for instance. All the result factors in the calculations are normalized to percentage numbers describing the relative risk or condition of the equipment.

The equipment condition measuring 6 data and the maintenance work 5 data is continuously acquired in real-time and stored to equipment reliability calculation system. Equipment reliability 7 is calculated based on the equipment condition measuring 6 data and the maintenance work 5 data.

Proactive Overall Equipment Effectiveness 8 is a product of Overall Equipment Effectiveness 4 and Equipment Reliability 7, POEE = OEE x equipment Reliability.

The sub-processes which have an impact on the current calculation are taken to the calculation as a coefficient by means of the Proactive Overall Equipment Effectiveness of the sub-process 9.

POEE is a percentage number containing exception information that tells whether one or more of the reliability components have violated the set exception limits. The exception information may contain several priority levels.

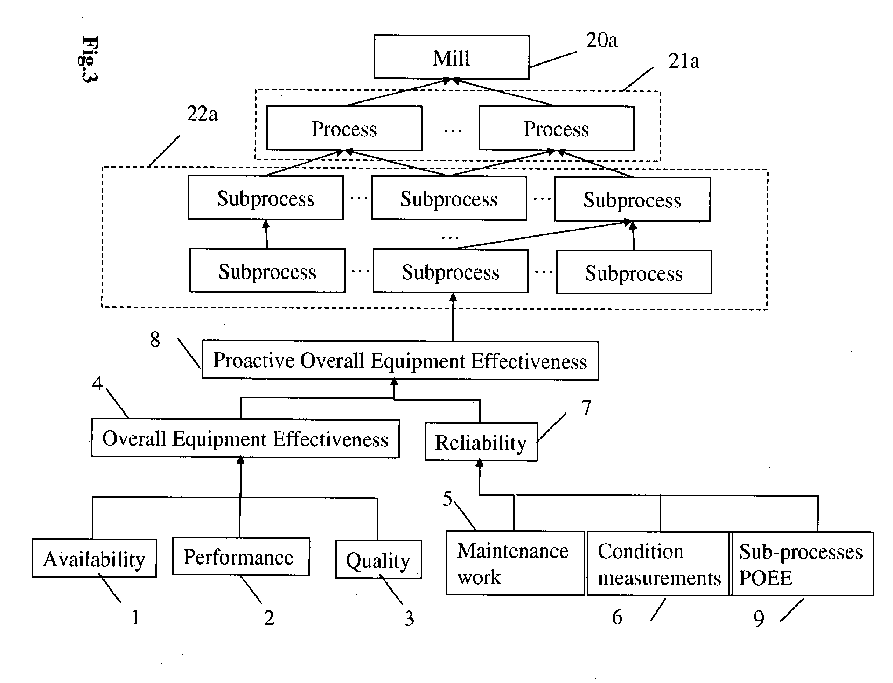

Figure 3 illustrates a logical model of a mill for calculating and cumulating the proactive overall equipment effectiveness for an industrial plant. A logical model is made by dividing a mill 20a or production line into processes 21a and further to sub-processes 22a and defining their connections and impacts to each others. A sub-process can contain one or more equipments or other sub-processes. Examples of mills are paper or pulp mills.

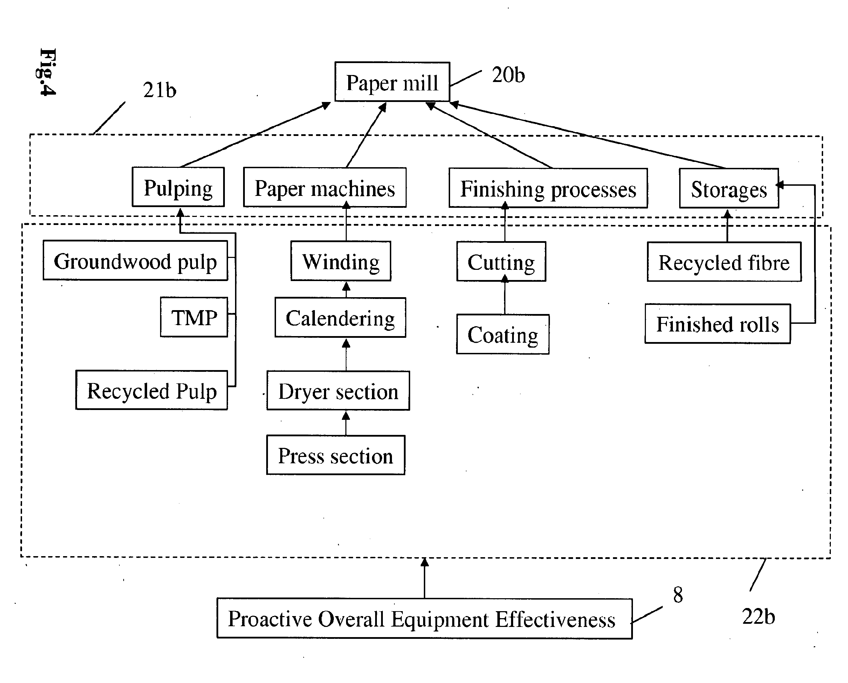

Figure 4 illustrates a logical model of a mill for calculating proactive overall equipment effectiveness for an industrial plant. The example production plant is a pulp and paper mill 20b comprising a number of processes 21b and sub-processes 22b. Only some examples of processes and sub-processes in a paper mill are illustrated. For instance pulping, paper machines, finishing processes and storages are processes 21b in a paper mill.

Pulping 21b has sub-processes 22b as groundwood pulp, thermomechanical pulping (TMP) and recycled pulp. In groundwood pulp production, the logs of wood are pressed on grinding stones by means of mechanical presses. The wood is split into fibers with the help of water. The TMP process converts wood chips into fibers by heat and mechanical forces. Recycled pulp uses the wood fibres in recovered newspapers and magazines to produce a clean, bright pulp for manufacturing newsprint.

Paper machines 21b have sub-processes per one paper machine as winding, calendaring, dryer section and press section.

Finishing processes 21b have sub-processes 22b like cutting and coating.

Paper mill storage processes 21b have several storage sub-processes 22b like storages for recycled fibre and finished rolls.

The Proactive Overall Equipment Effectiveness is calculated for equipment, a sub-process, process and for a plant. If a sub-process contains several equipments, the values of the Proactive Overall Equipment Effectiveness are normalized, prioritized, and cumulated to the sub-process and further to connected sub-processes. The cumulation ends up to the Proactive Overall Equipment Effectiveness of the whole plant or production line. Each calculation of the Proactive Overall Equipment Effectiveness contains definitions for filtering the exception information in cumulation.

The Proactive Overall Equipment Effectiveness is calculated in an information system provided for the purpose. The system is a database, for instance, which receives information and data from the existing information systems in the paper mill, and is able to perform the calculation.

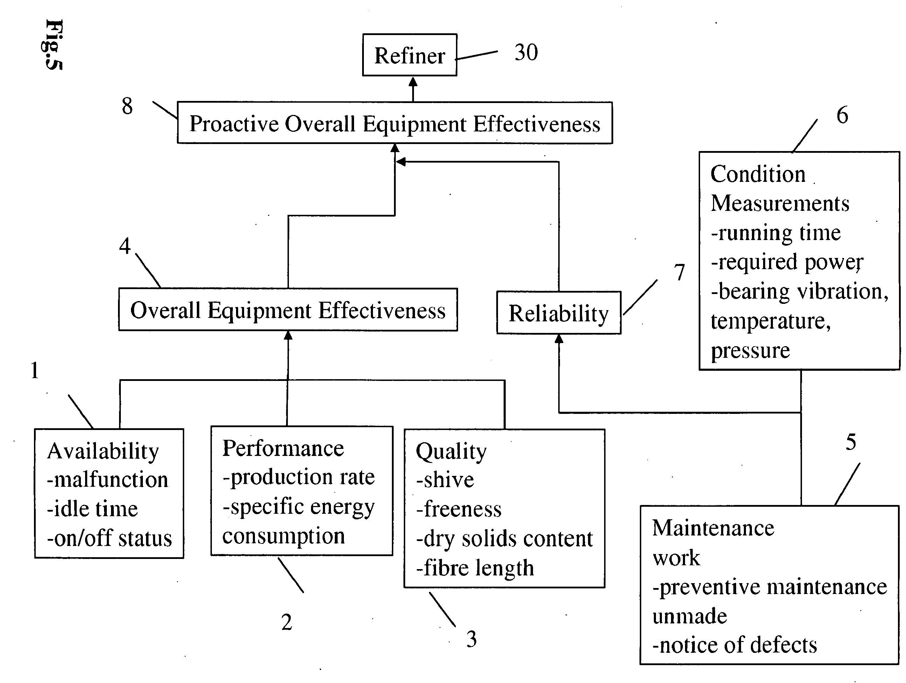

Figure 5 illustrates calculation of proactive overall equipment effectiveness for a sub-process in a plant. The example plant is a paper mill shown in Fig. 4 and an example of a sub-process is TMP pulp. In TMP pulp sub-process there is further a sub-process refining. The equipment refiner 30 is a mechanical device used to produce mechanical pulp between grooved metallic discs, of which the other or both are rotating. The refiner 30 unit has at least two parts, the mechanical refiner and an electric motor for driving the refiner.

The calculation information for availability 1 comprises malfunctions, unplanned idle time and operational data like on/off status.

The calculation information for Performance 2 comprises production rate (ton/h) and specific energy consumption (MWh/ton).

The calculation information for Quality 3 comprises shive, freeness, dry solids content, and fibre length data.

The calculation information for maintenance work 5 comprises information on performed or unmade preventive maintenance and notice of defects. It contains also information from users. Information from the users can be user observations like a water leakage meaning that one or more sealings are breaking in the refiner, or a noise telling there is a trouble with the bearings of the motor.

The calculation information for equipment condition measurements 6 comprises data like refiner and motor total running time, refiner running time with new disks, the operating hours of the equipment since last maintenance have exceed the set limit, required power, bearing vibration levels, temperature of the bearings and oil pressure. The information is real-time measuring data from automation or condition monitoring systems of the pulp mill.

The existing information collected from different information systems is converted to support the operability of the production plant. Availability 1 information is from Distributed control systems (DCS). Performance 2 information comes from Distributed control systems (DCS) and Manufacturing Execution System (MES). Quality information 3 is from Manufacturing Execution System (MES). Maintenance work 5 obtains information from Computerized Maintenance Management System (CMMS). Equipment condition measuring 6 information comes from Distributed control systems (DCS) or condition monitoring system.

Proactive Overall Equipment Effectiveness 8 can be calculated in real-time by acquiring and combining the source information for each calculation parts from the Distributed control systems (DCS), condition monitoring, Manufacturing Execution System (MES), Computerized Maintenance Management System (CMMS) and/or other existing information systems in the industrial plant.

Proactive Overall Equipment Effectiveness 8 for the refiner is a product of Overall Equipment Effectiveness 4 and Equipment Reliability 7. If the OEE is 0,90 and Equipment Reliability is 0,95 then POEE = 0,90 x 0,95 = 0,855.

At least part of the production process is controlled by Proactive Overall Equipment Effectiveness. The value of Proactive Overall Equipment Effectiveness is compared to a limit value or to a set of limit values. Depending on the value of the Proactive Overall Equipment Effectiveness there can be different measures to be taken. With the Proactive Overall Equipment Effectiveness system the operations personnel can drill down to the factors causing the decrease in POEE and take the required measures to return it back to acceptable level.

For instance, if the value of the Proactive Overall Equipment Effectiveness is over the set limit values and the process is efficient no further actions is needed. If the value has decreased the reason for that is looked for, e.g. from all values of the calculation parts the ones being below a specific limit are selected for further inspection. If the value of Proactive Overall Equipment Effectiveness has decreased remarkably the decision is made whether to reduce the production rate or reduce the quality of produced goods (run lower quality/production rate/speed etc.), by the operations personnel or if it is necessary to stop the whole process or part of it.

Further, the operations of the personnel can also be partly controlled by Proactive Overall Equipment Effectiveness. The tasks to be performed by the personnel and their order can be listed based on their impact on Proactive Overall Equipment Effectiveness.

There may be several similar types of electric motors as in the refiner in the paper and pulp mill, and their maintenance work order can be defined based on the motor's impact on the Proactive Overall Equipment Effectiveness. Some of the motors may also be serviced with shorter intervals than other motors of the same type. That is equipment priorization.

In the refiner example above the calculation information are examples for each calculation part, e.g. for maintenance work 5. The calculation information depends on the application and can contain less information or more information of same or other type.

In the refiner example above the information sources are examples for each calculation part, e.g. for maintenance work 5. In reality several existing information sources for each calculation part can be used.

The invention has been described above with the help of certain embodiments. However, the description should not be considered as limiting the scope of patent protection; the embodiments of the invention may vary within the scope of the following claims.

## Claims

1. A method for improving the operability of a production plant, where the production plant (20) has at least one production process (21) comprising at least one equipment (30), a system for obtaining equipment condition measuring data and a system for obtaining maintenance work data, and in the method the equipment condition measuring (6) data and the maintenance work (5) data is continuously acquired and stored in an equipment reliability calculation system, equipment reliability (7) is calculated based on the equipment condition measuring (6) data and the maintenance work (5) data, **characterised in that** Proactive Overall Equipment Effectiveness (8) is calculated as a product of the equipment reliability (7) and Overall Equipment Effectiveness (OEE) (4),
whereby said Overall Equipment Effectiveness (OEE) is obtained as a product of availability (1), performance (2) and quality (3).

2. A method according to Claim 1, **characterised in that** Proactive Overall Equipment Effectiveness (8) is calculated in real-time by acquiring and combining the source information from the Distributed control systems (DCS), condition monitoring, Manufacturing Execution System (MES), Computerized Maintenance Management System (CMMS) and/or other existing information systems in the industrial plant.

3. A method according to Claim 1, **characterised in that** at least part of the production process (21) or the operations of the personnel is controlled by Proactive Overall Equipment Effectiveness (8).

4. A method according to Claim 1, **characterised in that** the equipment condition measuring (6) data and the maintenance work (5) data is obtained real-time from at least one of the following in the production plant existing systems: Distributed control systems (DCS), Condition monitoring system, Manufacturing Execution System (MES) and Computerized Maintenance Management System (CMMS).

5. A method according to Claim 1, **characterised in that** the production plant is a pulp or paper mill.

6. A system for improving the operability of a production plant, where the production plant (20) has at least one production process (21) comprising at least one equipment (30), a system for obtaining equipment condition measuring data and a system for obtaining maintenance work data, and the system has means for continuously acquiring the equipment condition measuring (6) data and the maintenance work (5) data, and means for storing the acquired equipment condition measuring (6) data and the maintenance work (5) data in an equipment reliability calculation system, and means for calculating equipment reliability (7) based on the equipment condition measuring (6) and the maintenance work (5) data, **characterised in that** the system has means to calculate Proactive Overall Equipment Effectiveness (8) as a product of the equipment reliability (7) and Overall Equipment Effectiveness (OEE) (4), whereby said Overall Equipment Effectiveness (OEE) is obtained as a product of availability (1), performance (2) and quality (3).

7. A software product data recording medium in which program code is stored, which program code, when executed on a computer, will cause the computer to perform a method according to claim 1.

## Patentansprüche

1. Verfahren zur Verbesserung der Betriebsfähigkeit einer Produktionsanlage, wobei die Produktionsanlage (20) mindestens einen Produktionsprozess (21) aufweist, der mindestens ein Gerät (30), ein System zum Erhalten von Gerätezustandsmessdaten und ein System zum Erhalten von Instandhaltungsarbeitsdaten umfasst, und in dem Verfahren die Gerätezustandsmessdaten (6) und die Instandhaltungsarbeitsdaten (5) kontinuierlich erfasst und in einem Gerätebetriebssicherheitsberechnungssystem gespeichert werden, wobei die Gerätebetriebssicherheit (7) auf der Basis der Gerätezustandsmessdaten (6) und der Instandhaltungsarbeitsdaten (5) berechnet werden, **dadurch gekennzeichnet, dass** die proaktive Gesamtanlageneffektivität ("Proactive Overall Equipment Effectiveness") (8) als Produkt der Gerätebetriebssicherheit (7) und Gesamtanlageneffektivität (GAE) (4) berechnet wird, wobei die Gesamtanlageneffektivität (GAE) als Produkt von Verfügbarkeit (1), Leistung (2) und Qualität (3) erhalten wird.

2. Verfahren nach Anspruch 1, **dadurch gekennzeichnet, dass** die proaktive Gesamtanlageneffektivität (8) in Echtzeit durch Erfassen und Kombinieren der Quelleninformationen von den Prozessleitsystemen (PLS), einer Zustandsüberwachung, einem Fertigungsmanagementsystem ("Manufacturing Execution System" - MES), einem computergestützten Instandhaltungsmanagementsystem (Computerized Maintenance Management System - CMMS) und/oder anderen bestehenden Informationssystemen in der Industrieanlage berechnet wird.

3. Verfahren nach Anspruch 1, **dadurch gekennzeichnet, dass** mindestens ein Teil der Produktionsanlage (21) oder der Tätigkeiten des Personals durch proaktive Gesamtanlageneffektivität (8) gesteuert wird.

4. Verfahren nach Anspruch 1, **dadurch gekennzeichnet, dass** die Gerätezustandsmessdaten (6) und die Instandhaltungsarbeitsdaten (5) in Echtzeit von mindestens einem der Folgenden in den bestehenden Produktionsanlagensystemen erhalten wird: Prozessleitsysteme (PLS), Zustandsüberwachungssystem, Fertigungsmanagementsystem (MES), und computergestütztes Instandhaltungsmanagementsystem (CMMS).

5. Verfahren nach Anspruch 1, **dadurch gekennzeichnet, dass** die Produktionsanlage eine Zellstoff- oder Papiermühle ist.

6. System zur Verbesserung der Betriebsfähigkeit einer Produktionsanlage, wobei die Produktionsanlage (20) mindestens einen Produktionsprozess (21) aufweist, der mindestens ein Gerät (30), ein System zum Erhalten von Gerätezustandsmessdaten und ein System zum Erhalten von Instandhaltungsarbeitsdaten umfasst, und das System Mittel zum kontinuierlichen Erfassen der Gerätezustandsmessdaten (6) und der Instandhaltungsarbeitsdaten (5) aufweist sowie Mittel zum Speichern der erfassten Gerätezustandsmessdaten (6) und der Instandhaltungsarbeitsdaten (5) in einem Gerätebetriebssicherheitsberechnungssystem und Mittel zum Berechnen der Gerätebetriebssicherheit (7) auf der Basis der Gerätezustandsmessdaten (6) und der Instandhaltungsarbeitsdaten (5), **dadurch gekennzeichnet, dass** das System Mittel zum Berechnen der proaktiven Gesamtanlageneffektivität (8) als Produkt der Gerätebetriebssicherheit (7) und Gesamtanlageneffektivität (GAE) (4) aufweist, wobei die Gesamtanlageneffektivität (GAE) als Produkt von Verfügbarkeit (1), Leistung (2) und Qualität (3) erhalten wird.

7. Software-Produktdatenaufzeichnungsmedium, in dem ein Programmcode gespeichert ist, wobei der Programmcode, wenn er auf einem Computer ausgeführt wird, den Computer veranlasst, ein Verfahren nach Anspruch 1 auszuführen.

## Revendications

1. Procédé pour améliorer l'efficacité opérationnelle d'une usine de fabrication, dans lequel l'usine de fabrication (20) possède au moins un processus de production (21) comprenant au moins un équipement (30), un système pour obtenir des données de mesure des conditions des équipements et un système pour obtenir des données de travaux de maintenance, et dans le cadre du procédé les données de mesure des conditions des équipements (6) et les données des travaux de maintenance (5) sont acquises et mémorisées en continu dans un système de calcul de fiabilité des équipements, **caractérisé en ce que** la fiabilité des équipements (7) est calculée sur la base des données de mesure des conditions des équipements (6) et des données des travaux de maintenance (5), **caractérisé en ce que** l'efficacité globale proactive des équipements (8) est calculée comme un produit de la fiabilité des équipements (7) et de l'efficacité globale des équipements (OEE) (4), moyennant quoi ladite efficacité globale des équipements (OEE) est obtenue comme un produit de la disponibilité (1), la performance (2) et la qualité (3).

2. Procédé selon la revendication 1, **caractérisé en ce que** une efficacité proactive globale des équipements (8) est calculée en temps réel en acquérant et combinant l'information source des systèmes de commande distribués (DCS), de surveillance des conditions, du système d'exécution de production (MES), du système de gestion de maintenance informatisé (CMMS) et/ou d'autres systèmes d'information existants dans l'établissement industriel.

3. Procédé selon la revendication 1, **caractérisé en ce qu'**au moins une partie du processus de production (21) ou les opérations du personnel sont commandées par l'efficacité proactive globale des équipements (8).

4. Procédé selon la revendication 1, **caractérisé en ce que** les données de mesure des conditions des équipements (6) et les données des travaux de maintenance (5) sont obtenues en temps réel à partir d'au moins un des systèmes existants de l'usine de fabrication : systèmes de commande distribuée (DCS), système de surveillance des conditions, système d'exécution de fabrication (MES) et système de gestion de maintenance informatisée (CMMS).

5. Procédé selon la revendication 1, **caractérisé en ce que** l'usine de fabrication est une usine de papier ou de pâte à papier.

6. Système pour améliorer l'efficacité opérationnelle d'une usine de fabrication, dans lequel l'usine de fabrication (20) comporte au moins un processus de production (21) comprenant au moins un équipement (30), un système pour obtenir des données de mesure des conditions des équipements et un système pour obtenir des données de travaux de maintenance, et le système comporte des moyens pour acquérir en continu les données de mesure des conditions des équipements (6) et les données des travaux de maintenance (5), et des moyens pour mémoriser les données de mesure des conditions des équipements (6) acquises et les données des travaux de maintenance (5) dans un système de calcul de fiabilité des équipements, et des moyens de calcul de fiabilité des équipements (7), sur la base des données de mesure des conditions des équipements (6) et des données des travaux de maintenance (5), **caractérisé en ce que** le système comporte des moyens pour calculer une efficacité proactive globale des équipements (8) comme un produit de la fiabilité des équipements (7) et de l'efficacité globale des équipements (OEE) (4), moyennant quoi ladite efficacité globale des équipements (OEE) est obtenue comme un produit de la disponibilité (1), la performance (2) et la qualité (3).

7. Support d'enregistrement de données de produit logiciel, dans lequel du code de programme est mémorisé, lequel code de programme, quand il est exécuté sur un ordinateur, amènera l'ordinateur à mettre en oeuvre un procédé selon la revendication 1.
